(19) Europäisches Patentamt
European Patent Office
Office européen des brevets

(11) Publication number: **0 512 483 A1**

# (12) EUROPEAN PATENT APPLICATION

(21) Application number: **92107588.3**

(22) Date of filing: **05.05.92**

(51) Int. Cl.$^5$: **G03C 1/12**, C09B 23/00, G03C 1/22

(30) Priority: **09.05.91 US 697811**

(43) Date of publication of application: **11.11.92 Bulletin 92/46**

(84) Designated Contracting States: **AT BE CH DE DK ES FR GB IT LI NL SE**

(71) Applicant: **EASTMAN KODAK COMPANY**
**343 State Street**
**Rochester, New York 14650-2201(US)**

(72) Inventor: **Mee, John David, c/o EASTMAN KODAK COMPANY**
**Patent Legal Staff 343 State Street**
**Rochester New York 14650-2201(US)**

(74) Representative: **Brandes, Jürgen, Dr.**
**Wuesthoff & Wuesthoff Patent- und Rechtsanwälte Schweigerstrasse 2**
**W-8000 München 90(DE)**

## (54) Hemicyanine sensitizing dyes for photographic materials.

(57) Hemicyanine sensitizing dyes of the following formula are disclosed:

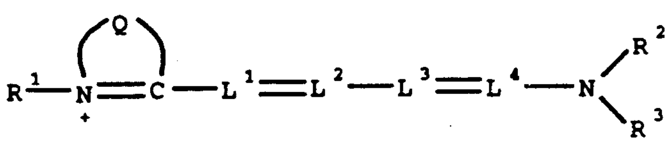

where

Q represents the atoms necessary to complete a substituted or unsubstituted benzoxazole or thiazoline nucleus;

$R^1$ is an acid or acid salt substituted alkyl group;

$R^2$ and $R^3$ are each alkyl, or $R^2$ and $R^3$ together form an alkylene unit which together with the nitrogen atom to which it is bonded forms a heterocyclic ring; and

$L^1$, $L^2$, $L^3$, and $L^4$ are each substituted or unsubstituted methine groups.

The dyes are effective blue sensitizers for silver halide photographic materials, and photographic materials comprising silver halide sensitized with such dyes allow handling under safelights and exhibit low post-processing dye stain.

EP 0 512 483 A1

This invention relates to dyes, and more particularly to their use as long blue sensitizers for photographic materials.

Silver halide photography usually involves the exposure of silver halide with light in order to form a latent image that is developed during photographic processing to form a visible image. Silver halides are generally intrinsically sensitive to light in the ultraviolet and short blue region of the spectrum. In many applications it is desirable to include spectral sensitizing dyes in order to augment the sensitivity of silver halide in the region in which it is intrinsically sensitive, or to provide sensitivity to longer blue or to other wavelengths of the electomagnetic spectrum. Sensitizing dyes are chromophoric compounds (usually polymethine dye compounds) that are adsorbed to the silver halide. They absorb light or radiation of a particular wavelength and transfer the energy to the silver halide to form a latent image, thus spectrally sensitizing the silver halide.

During conventional processing of color photographic materials, the silver halide is removed from the material. With black and white materials, the silver halide that is not exposed is removed. In either case, it is desirable to remove any sensitizing dye as well. Sensitizing dye that is not removed tends to cause retained dye stain, which adversely affects the image recorded in the photographic material.

Care must be taken in the selection of spectral sensitizing dyes in order to provide the desired sensitization while avoiding sensitization in undesired regions. For example, in graphic arts camera and laser scanner films it is often desirable to enhance the sensitivity of silver halide to light in the blue wavelength region (such as from a xenon lamp or a 488 nm argon laser) while maintaining insensitivity at another "safelight" wavelength, such as above 570 nm. This provides a photographic element, which while being spectrally sensitized at one wavelength, may also be handled under light within the safelight region without generating any latent image in the silver halide.

Hemicyanine dyes of the following general formula (I) are known spectral sensitizing dyes, species of which are disclosed in US-A-4,725,532, 3,788,859, 2,166,736 and 2,263,749 and British Pat. Specification 1,229,951, the disclosures of which are incorporated by reference:

(I)

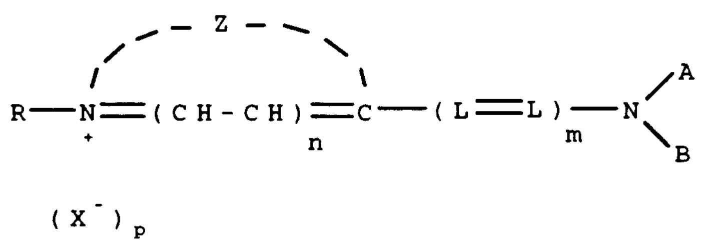

wherein Z represents a group of atoms necessary to complete a substituted or unsubstituted five or six membered heterocyclic nucleus; R represents a substituted or unsubstituted alkyl group; A and B represent H, substituted or unsubstituted alkyl or aryl, or, together with the nitrogen atom to which they are bonded, form a heterocyclic ring; L represents a substituted or unsubstituted methine group; n is 0 or 1; m is 1, 2, or 3; $X^-$ represents an anion; and p is 0 or 1.

Benzoxazole and thiazoline hemicyanine dyes within the above general formula (I) where n is 0, m is 2, and A and B are each alkyl or together with the nitrogen atom form a heterocyclic ring generally provide spectral sensitivity in the 450-500 nm long blue region of the spectrum, and silver halide emulsions sensitized with these dyes are generally safe to handle under yellow safelights. The use of cationic hemicyanines such as these, however, frequently results in unacceptable levels of post-process dye stain. While the inclusion of a solubilizing group such as an acid or acid salt substituent on the dye may help in reducing dye stain, such substituents also have been found to undesirably reduce blue speed in many cases.

It is thus an object of the invention to provide sensitizing dyes that sensitize silver halide emulsions efficiently in the 450-500 long blue region of the spectrum while still allowing the emulsions to be handled under yellow safelights, and that leave very low levels of residual dye stain in photographic elements after processing. Such emulsions would be particularly desirable for use in blue-sensitive graphic arts camera and laser scanner films.

These and other objects are met in accordance with the present invention which provides hemicyanine dyes of the following formula (II):

(II) 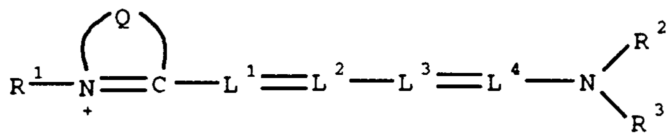

where

Q represents the atoms necessary to complete a substituted or unsubstituted benzoxazole or thiazoline nucleus;

$R^1$ is an acid or acid salt substituted alkyl group of preferably one to six carbon atoms;

$R^2$ and $R^3$ are each alkyl of preferably one to six carbon atoms, or $R^2$ and $R^3$ together form an alkylene unit which together with the nitrogen atom to which it is bonded forms a heterocyclic ring; and

$L^1$, $L^2$, $L^3$, and $L^4$ are each substituted or unsubstituted methine groups.

The dyes of formula II are effective blue sensitizers for silver halide photographic materials, and photographic materials comprising silver halide sensitized with such dyes allow handling under yellow safelights and exhibit low post-processing dye stain. Dyes of formula II are particularly advantageously used in lithographic films used in the field of graphic arts.

Examples of substituted alkyl $R^1$ in the above formula (II) include sulfoalkyl such as sulfopropyl, sulfobutyl, etc.; carboxyalkyl such as carboxyethyl, carboxybutyl, etc.; sulfatoalkyl such as sulfatoethyl, sulfatobutyl and so forth. Methine groups $L^1$ through $L^4$ may be substituted with substituted or unsubstituted alkyl groups of from one to six carbon atoms, but are preferably unsubstituted. Alkyl groups $R^2$ and $R^3$ preferably form a pyrrolidine or piperidine ring with the nitrogen atom to which they are bonded. Examples of substituents for the benzoxazole nucleus include one or more of halogen, substituted or unsubstituted alkyl, substituted or unsubstituted aryl, alkoxy and other substituents commonly included on sensitizing dyes.

Examples of dyes according to formula (II) include the following, where $SP^-$ represents 3-sulfopropyl, $4SB^-$ represents 4-sulfobutyl, and $3SB^-$ represents 3-sulfobutyl:

II-1 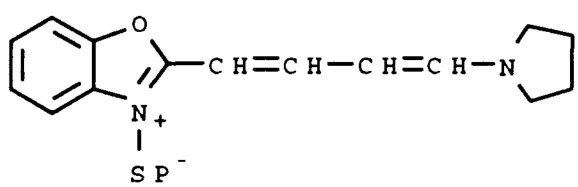

II-2 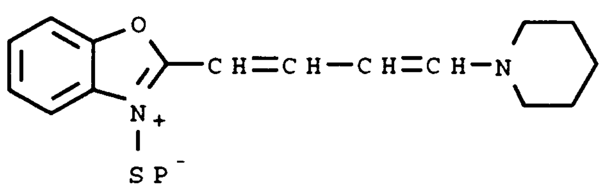

II-3

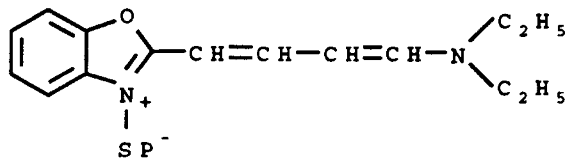

II-4

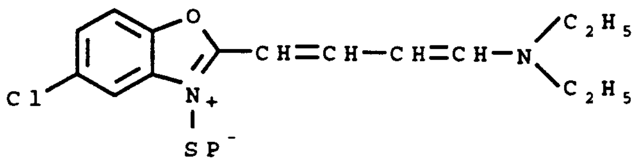

II-5

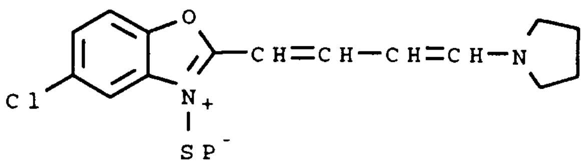

II-6

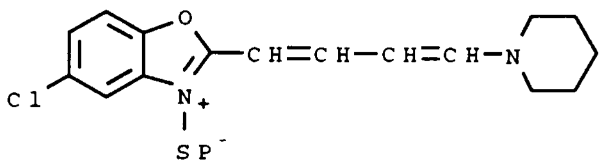

II-7

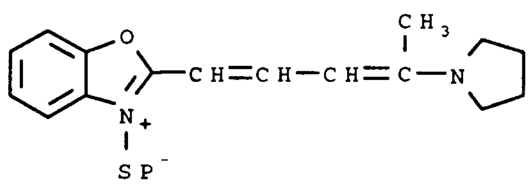

II-8

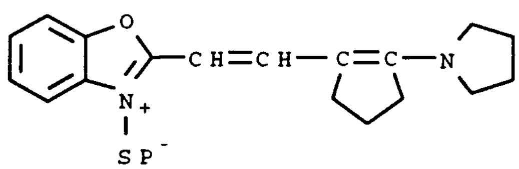

II-9

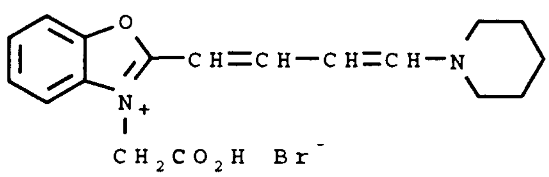

II-10

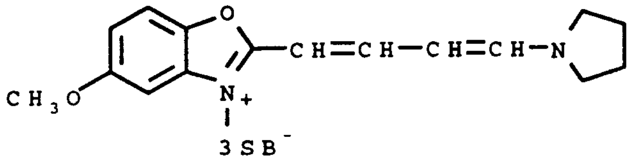

II-11

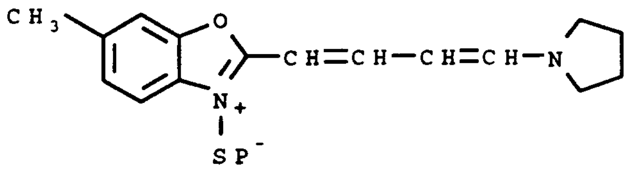

II-12

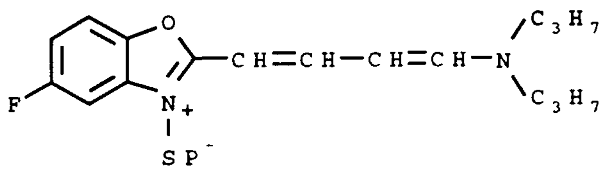

II-13

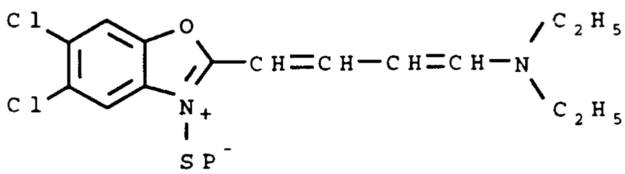

II-14

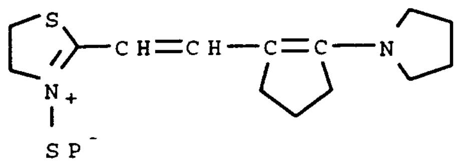

II-15

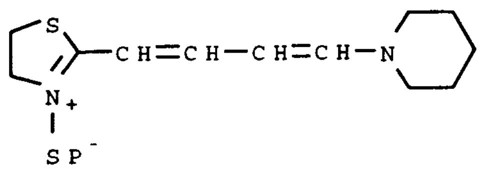

II-16

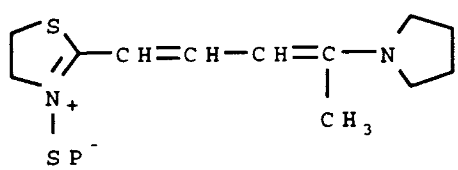

II-17

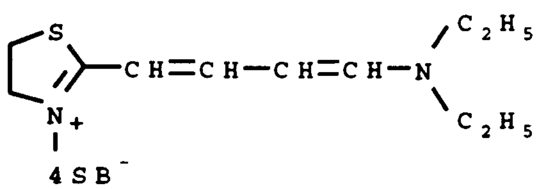

The dyes of formula (II) can be prepared according to techniques that are well-known in the art, such as described in Hamer, Cyanine Dyes and Related Compounds, 1964 and James, The Theory of the

Photographic Process 4th, 1977, and the above referenced patents.

The amount of sensitizing dye that is useful in the invention is preferably in the range of 0.1 to 1.0 millimoles per mole of silver halide and more preferably from 0.2 to 0.7 millimoles per mole of silver halide. Optimum dye concentrations will depend on the intended end use of the photographic material and can be determined by methods known in the art.

The silver halide used in the practice of the invention can be of any known type, such as silver bromoiodide, silver bromide, silver chloride, silver chlorobromide, and the like. The silver halide grains may be of any known type, such as spherical, cubic, or tabular grains. In a preferred embodiment, the dyes of the invention are used to sensitize a cubic black and white graphic arts emulsion.

The silver halide grains to be used in the invention may be prepared according to methods known in the art, such as those described in Research Disclosure, Item 308119, December, 1989 [hereinafter referred to as Research Disclosure I] and James, The Theory of the Photographic Process. These include methods such as ammoniacal emulsion making, neutral or acid emulsion making, and others known in the art. These methods generally involve mixing a water soluble silver salt with a water soluble halide salt in the presence of a protective colloid, and controlling the temperature, pAg, pH values, etc, at suitable values during formation of the silver halide by precipitation.

The silver halide to be used in the invention may be subjected to chemical sensitization with compounds such as gold sensitizers (e.g., aurous sulfide) and others known in the art. Compounds and techniques useful for chemical sensitization of silver halide are known in the art and described in Research Disclosure I and the references cited therein.

The silver halide may be sensitized by the dye of formula II by any method known in the art, such as described in Research Disclosure I. The dye may be added to an emulsion of the silver halide grains and a hydrophilic colloid at any time prior to (e.g., during or after chemical sensitization) or simultaneous with the coating of the emulsion on a photographic element.

In a preferred embodiment of the invention, the sensitizing dyes of the invention are used to sensitize silver halide in photographic emulsions, which can be coated as layers on photographic elements. Essentially any type of emulsion (e.g., negative-working emulsions such as surface-sensitive emulsions of unfogged internal latent image-formaing emulsions, direct-positive emulsions such as surface fogged emulsions, or others described in, for example, Research Disclosure I) may be used.

Photographic emulsions generally include a vehicle for coating the emulsion as a layer of a photographic element. Useful vehicles include both naturally occurring substances such as proteins, protein derivatives, cellulose derivatives (e.g., cellulose esters), gelatin (e.g., alkali-treated gelatin such as cattle bone or hide gelatin, or acid treated gelatin such as pigskin gelatin), gelatin derivatives (e.g., acetylated gelatin, phthalated gelatin, and the like), and others as described in Research Disclosure I. Also useful as vehicles or vehicle extenders are hydrophilic water-permeable colloids. These include synthetic polymeric peptizers, carriers, and/or binders such as poly(vinyl alcohol), poly(vinyl lactams), acrylamide polymers, polyvinyl acetals, polymers of alkyl and sulfoalkyl acrylates and methacrylates, hydrolyzed polyvinyl acetates, polyamides, polyvinyl pyridine, methacrylamide copolymers, and the like, as described in Research Disclosure I. The vehicle can be present in the emulsion in any amount known to be useful in photographic emulsions.

The emulsion can also include any of the addenda known to be useful in photographic emulsions. These include chemical sensitizers, such as active gelatin, sulfur, selenium, tellurium, gold, platinum, palladium, iridium, osmium, rhenium, phosphorous, or combinations thereof. Chemical sensitization is generally carried out at pAg levels of from 5 to 10, pH levels of from 5 to 8, and temperatures of from 30 to 80°C, as illustrated in Research Disclosure, June 1975, item 13452 and US-A-3,772,031.

Other addenda include brighteners, antifoggants, stabilizers, filter dyes, light absorbing or reflecting pigments, vehicle hardeners such as gelatin hardeners, coating aids, dye-forming couplers, and development modifiers such as development inhibitor releasing couplers, timed development inhibitor releasing couplers, and bleach accelerators. These addenda and methods of their inclusion in emulsion and other photographic layers are well-known in the art and are disclosed in Research Disclosure I and the references cited therein.

The emulsion layer containing silver halide sensitized with the dye of formula II can be coated simultaneously or sequentially with other emulsion layers, subbing layers, filter dye layers, interlayers, or overcoat layers, all of which may contain various addenda know to be included in photographic elements. These include antifoggants, oxidized developer scavengers, DIR couplers, antistatic agents, optical brighteners, light-absorbing or light-scattering pigments, and the like.

The layers of the photographic element can be coated onto a support using techniques well-known in the art. These techniques include immersion or dip coating, roller coating, reverse roll coating, air knife

coating, doctor blade coating, stretch-flow coating, and curtain coating, to name a few. The coated layers of the element may be chill-set or dried, or both. Drying may be accelerated by known techniques such as conduction, convection, radiation heating, or a combination thereof.

Photographic elements comprising the composition of the invention can be processed in any of a number of well-known photographic processes utilizing any of a number of well-known processing compositions, described, for example, in Research Disclosure I, or in James, The Theory of the Photographic Process 4th, 1977.

The invention is described further in the following synthesis and photographic examples.

Synthesis of Dye II-1

Anhydro 2-(4-acetanilido-1,3-butadienyl)-3-(3-sulfopropyl) benzoxazolium hydroxide (4.26 g) was added to a stirred solution of pyrrolidine (1.42 g) in ethanol (75 ml). From the solution thus obtained, solid rapidly separated. After 10 minutes, the solid was collected and washed with ethanol. Recrystallization from methanol (300 ml) gave 2.73 g (73%) of purified dye ( $\lambda_{max}$ (MeOH) 452 nm, $\epsilon_{max}$ 13.7x10$^4$).

Photographic Example 1

Photographic elements capable of high contrast development were prepared similarly to Film A in Example 33 of US patent no. 4,975,354, the disclosure of which is incorporated by reference, except the emulsion contained a blend of 0.25 µm and 0.18 µm AgBrI (2.7 mole % iodide) grains spectrally sensitized with dyes of formula II according to the invention or comparative dyes as indicated below.

The elements were given a 5 second exposure to a tungsten light source on a DF Sensitometer through a Kodak Wratten Gelatin Filter No. 69 in combination with a 0.4 neutral density filter. The exposed elements were processed similarly as in Example 33 of US-A4,975,354 with an amine containing Developer A as defined therein at 30 °C for 80 seconds.

The wavelength of maximum spectral sensitivity, broad band blue speed, 488 nm speed, and stain are reported in Table I below. Speeds are reported in relative log exposure terms and stain was determined by visual comparison to an un-dyed sample.

In addition to the indicated dyes of the invention, the following comparison dyes C-1 through C-13 were evaluated:

C-1

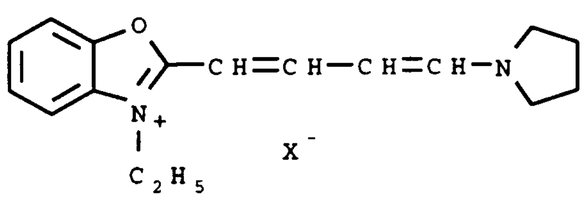

C-2

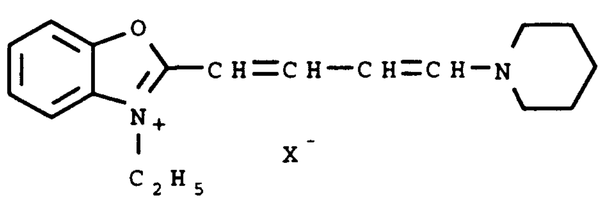

C-3

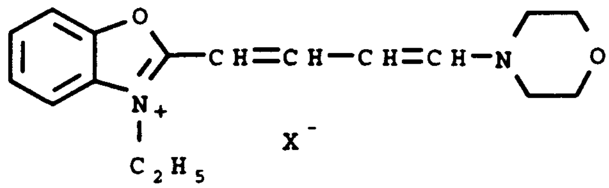

C-4

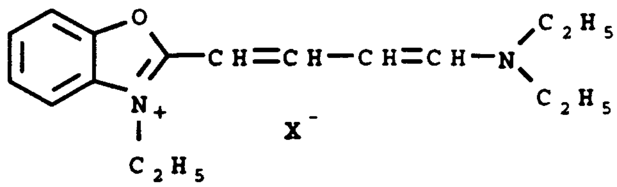

C-5

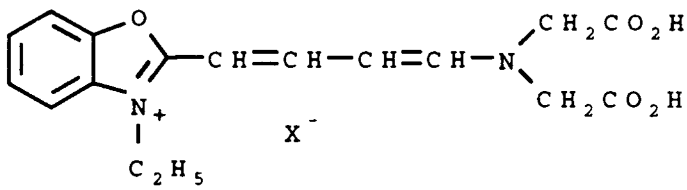

C-6

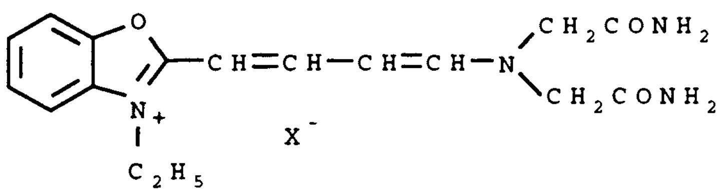

C-7

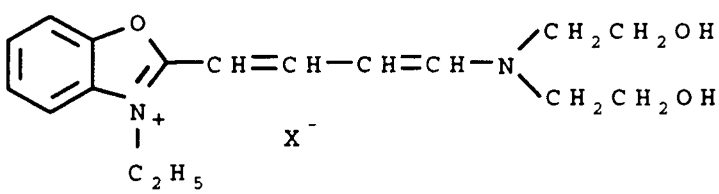

C-8

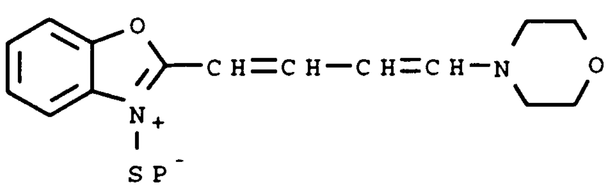

C-9

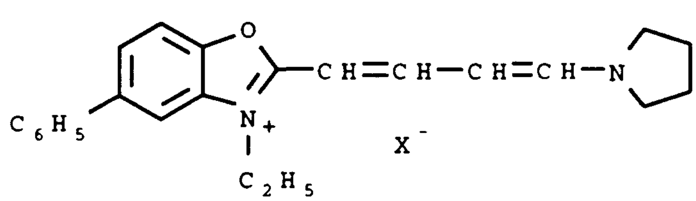

C-10

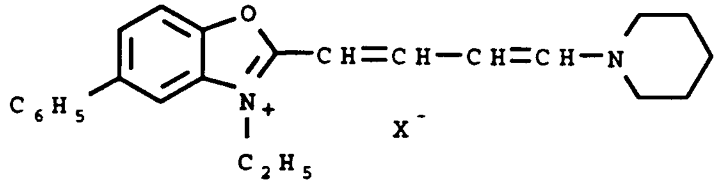

C-11

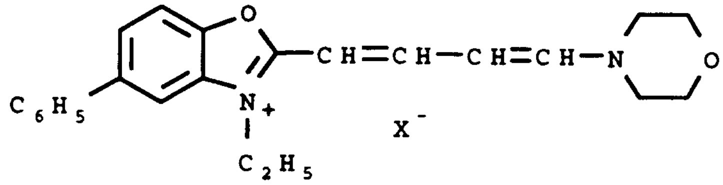

C-12

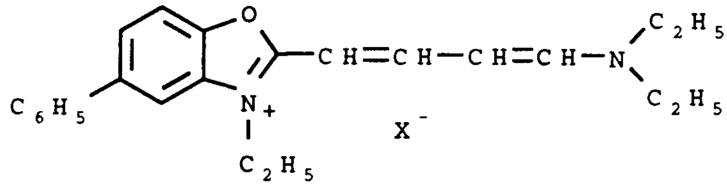

C-13

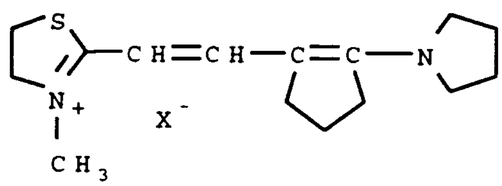

The following results were obtained:

Table I

| Dye | Sens. λ-max (nm) | Blue Speed | 488 nm Speed | Stain |
|---|---|---|---|---|
| II-1 | 440 | 211 | 85 | No |
| II-2 | 480 | 175 | 51 | No |
| II-3 | 480 | 165 | 39 | No |
| II-4 | 470 | 200 | 75 | No |
| II-5 | 460 | 189 | 79 | No |
| II-6 | 480 | 190 | 78 | No |
| II-7 | 520 | 198 | 60 | No |
| II-8 | 500 | 182 | 48 | No |
| C-1 | ND | ND | ND | Yes |
| C-2 | ND | ND | ND | Yes |
| C-3 | ND | ND | ND | Yes |
| C-4 | ND | ND | ND | Yes |
| C-5 | 400 | 143 | - | No |
| C-6 | 400 | 151 | -9 | No |
| C-7 | 480 | 159 | 16 | Yes |
| C-8 | 440 | 187 | 67 | Yes |
| C-9 | 475 | 231 | 120 | Yes |
| C-10 | 480 | 202 | 88 | Yes |
| C-11 | 480 | 222 | 113 | Yes |
| C-12 | 490 | 203 | 97 | Yes |
| C-13 | 480 | 173 | 56 | Yes |
| ND = Not Determined | | | | |

The above data demonstrates that the hemicyanines of the invention provide sufficient blue speed while leaving negligable dye stain.

Photographic Example 2

In order to evaluate safelight performance, photographic elements were prepared by coating a 0.2 µm cubic AgBrI (2.56 mole % iodide) emulsion on a polyester support at a level of 1.08 g $Ag/m^2$ and 7.32 g $gelatin/m^2$. The emulsions were spectrally sensitized with dyes of the invention and comparison dyes A and B as indicated below in Table II at 0.8 mmole/mole Ag.

The elements were given one second exposures in a Horton sensitometer, and processed in Kodak RP X-Omat® processing at 35°C. Sensitometric curves were generated from the exposed and processed elements, and the speed at λ-max and the "cutoff" wavelength were determined. The cutoff wavelength is the wavelength at which the spectral sensitivity plot of the Horton spectrogram intersects the baseline (wavelength beyond which little sensitivity is exhibited). The following results were obtained:

Table II

| Dye | λ-max | Speed | Cutoff |
|---|---|---|---|
| II-1 | 480 | 167 | 530 |
| II-2 | 470 | 162 | 510 |
| II-3 | 470 | 153 | 500 |
| II-4 | 470 | 169 | 510 |
| II-5 | 480 | 180 | 530 |
| II-6 | 470 | 182 | 520 |
| II-7 | 480 | 177 | 530 |
| II-8 | 500 | 203 | 560 |
| II-14 | 480 | 179 | 530 |
| A | 550 | 236 | 580 |
| B | 500 | 173 | 540 |

A

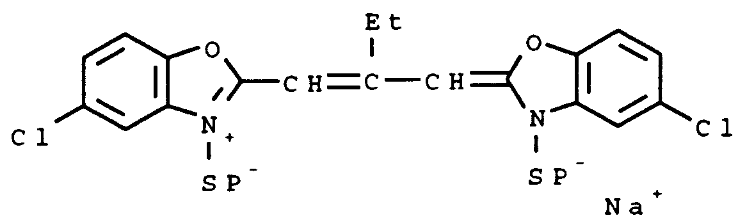

B

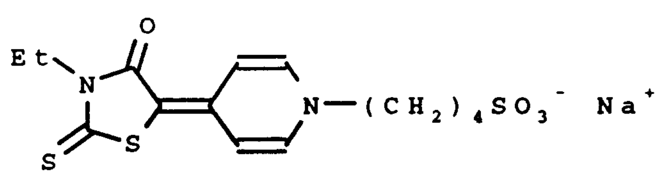

As shown above, the dyes of the invention have a shorter cutoff wavelength and/or greater photographic speed than comparison dyes A and B, which are dyes sometimes used in graphic arts photographic products. The shorter cutoff wavelengths are a significant advantage in that they allow photographic elements sensitized with the dyes of the invention to be handled under safelights with less risk to the elements.

## Claims

1. A photographic element comprising a support having thereon a silver halide emulsion layer sensitized with a hemicyanine dye of the following formula (II):

(II)

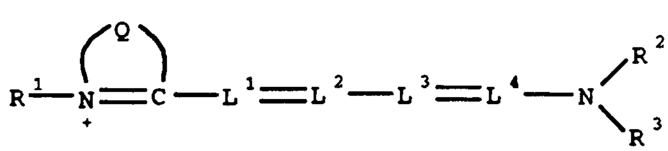

where

Q represents the atoms necessary to complete a substituted or unsubstituted benzoxazole or

thiazoline nucleus;

$R^1$ is an acid or acid salt substituted alkyl group;

$R^2$ and $R^3$ are each alkyl, or $R^2$ and $R^3$ together form an alkylene unit which together with the nitrogen atom to which it is bonded forms a heterocyclic ring; and

$L^1$, $L^2$, $L^3$, and $L^4$ are each substituted or unsubstituted methine groups.

**2.** A photographic element as claimed in claim 1 wherein $L^1$ through $L^4$ are each unsubstituted methine.

**3.** A photographic element as claimed in claim 1 wherein $R^2$ and $R^3$ together with the nitrogen atom to which they are bonded form a pyrrolidine ring.

**4.** A photographic element as claimed in claim 1 wherein $R^2$ and $R^3$ together with the nitrogen atom to which they are bonded form a piperidine ring.

**5.** A photographic element as claimed in claim 1 wherein $R^1$ is sulfoalkyl of from 1 to 6 carbon atoms.

**6.** A photographic element as claimed in claim 1 wherein Q represents the atoms necessary to complete a substituted or unsubstituted benzoxazole nucleus.

**7.** A photographic element as claimed in claim 6 wherein $L^1$ through $L^4$ are each unsubstituted methine.

**8.** A photographic element as claimed in claim 6 wherein $R^2$ and $R^3$ together with the nitrogen atom to which they are bonded form a pyrrolidine ring.

**9.** A photographic element as claimed in claim 6 wherein $R^2$ and $R^3$ together with the nitrogen atom to which they are bonded form a piperidine ring.

**10.** A photographic element as claimed in claim 6 wherein $R^1$ is sulfoalkyl of from 1 to 6 carbon atoms.

**11.** A photographic element as claimed in claim 1 wherein Q represents the atoms necessary to complete a substituted or unsubstituted thiazoline nucleus.

**12.** A photographic element as claimed in claim 11 wherein $R^2$ and $R^3$ together with the nitrogen atom to which they are bonded form a pyrrolidine ring.

**13.** A photographic element as claimed in claim 11 wherein $R^2$ and $R^3$ together with the nitrogen atom to which they are bonded form a piperidine ring.

**14.** A photographic element as claimed in claim 11 wherein $R^1$ is sulfoalkyl of from 1 to 6 carbon atoms.

**15.** A photographic sensitizing dye as claimed in the following formula II:

(II)

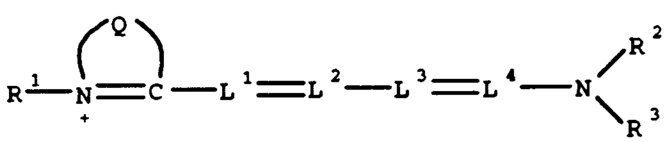

where

Q represents the atoms necessary to complete a substituted or unsubstituted benzoxazole or thiazoline nucleus;

R1 is an acid or acid salt substituted alkyl group;

R2 and R3 are each alkyl, or R2 and R3 together with the nitrogen atom to which they are bonded form a heterocyclic ring; and

L1, L2, L3, and L4 are each substituted or unsubstituted methine groups.

**16.** A dye as claimed in claim 15 wherein $L^1$ through $L^4$ are each unsubstituted methine.

**17.** A dye as claimed in claim 15 wherein $R^2$ and $R^3$ together with the nitrogen atom to which they are bonded form a pyrrolidine ring.

**18.** A dye as claimed in claim 15 wherein $R^2$ and $R^3$ together with the nitrogen atom to which they are bonded form a piperidine ring.

**19.** A dye as claimed in claim 15 wherein $R^1$ is sulfoalkyl of from 1 to 6 carbon atoms.

**20.** A dye as claimed in claim 15 wherein Q represents the atoms necessary to complete a substituted or unsubstituted benzoxazole nucleus.

European Patent Office

# EUROPEAN SEARCH REPORT

Application Number

EP 92 10 7588

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CH-A-471 406 (KODAK)<br>* column 4, line 4 - column 5, line 29; claims *<br>---- | 1-20 | G03C1/12<br>C09B23/00<br>G03C1/22 |
| D,X | FR-A-2 111 005 (FUJI PHOTO FILM)<br>* page 2, line 21 - page 3, line 24 * | 1-20 | |
| A | * page 7; example 21 *<br>---- | | |
| D,A | DE-A-881 902 (KODAK)<br>* page 2; claims; example 8 *<br>----- | | |

TECHNICAL FIELDS SEARCHED (Int. Cl.5 )

G03C
C09B

The present search report has been drawn up for all claims

| Place of search | Date of completion of the search | Examiner |
|---|---|---|
| THE HAGUE | 19 AUGUST 1992 | PHILOSOPH L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document